# FASCICULE DE BREVET EUROPEEN

(11) **EP 2 107 532 B1**
(45) Date de publication et mention de la délivrance du brevet: **22.04.2015**
(21) Numéro de dépôt: 09290251.9
(22) Date de dépôt: 02.04.2009
(51) Int. Cl.: G07C 5/08, G08B 13/14

(54) **Dispositif de sondage de données sécurisées relatives à la conduite d'un véhicule**
Vorrichtung zur Erhebung von gesicherten Daten über das Führen eines Fahrzeugs
Device to probe for secure data relating to the driving of a vehicle

(30) Priorité: 04.04.2008 FR 0852279
(43) Date de publication de la demande: 07.10.2009
(73) Titulaire: Covea Technologies, 75014 Paris Cedex 14 (FR)
(72) Inventeur: Favennec, Patrick, 72000 Le Mans (FR)
(74) Mandataire: Novagraaf Technologies

(56) Documents cités:
- WO-A-94/06100
- WO-A-95/24022
- WO-A-2006/137035
- WO-A-2007/128119
- US-A- 6 121 880
- US-A1- 2007 035 397

## Description

### DOMAINE TECHNIQUE DE L'INVENTION

L'invention se rapporte au domaine des dispositifs de sondage de données relatives à la conduite d'un véhicule.

### ÉTAT DE LA TECHNIQUE ANTÉRIEURE

Dans ce domaine, il est connu par les demandes WO 2007/128119 et WO94/06100 un système sondage de données relatives au comportement de conduite d'un véhicule. Ce système comprend un dispositif de sondage embarqué dans un véhicule. Le dispositif de sondage inclut des moyens de détection comme un accéléromètre et un GPS et des moyens d'exportation de données depuis le véhicule vers une base de données externe. Ces données peuvent être utilisées pour calculer le prix d'une assurance et/ou pour délivrer des conseils de prévention par rapport à un véhicule sondé.

Aussi, comme une assurance s'applique à un véhicule particulier, il est nécessaire de s'assurer que le dispositif de sondage est bien embarqué dans le bon véhicule. En effet, si le dispositif de sondage était frauduleusement déplacé, les données seraient faussées et ne refléteraient plus le comportement de conduite du ou des conducteurs du véhicule. Ainsi, un client indélicat pourrait déplacer le dispositif de sondage sur un autre véhicule pour tenter de bénéficier d'un avantage tarifaire.

Pour éviter les fraudes, il serait possible de transposer des moyens d'inviolabilité déjà connus dans l'art antérieur dans cette application. Par exemple, il serait possible de transposer un moyen d'inviolabilité, du type, servant à s'assurer qu'un compteur électrique n'a pas été ouvert. Ainsi, un tel moyen d'inviolabilité consisterait à relier le dispositif de sondage à un point d'ancrage du véhicule par fil sur lequel serait appliqué un sceau en cire ou un plomb.

Toutefois, pour s'assurer qu'il n'y a pas eu de fraude, un agent devrait se déplacer pour contrôler visuellement l'état du moyen d'inviolabilité. Compte tenu du fait que de tels dispositifs de sondage sont destinés à être installés sur un grand nombre de véhicules, les coûts à prévoir pour contrôler ces moyens d'inviolabilité seraient considérables.

### EXPOSE DE L'INVENTION

L'invention vise à remédier aux inconvénients précités en proposant un véhicule équipé d'un dispositif de sondage de données relatives à la conduite du véhicule tel que défini dans la revendication 1

Ainsi, il est possible de contrôler l'état du moyen d'inviolabilité à distance.

Le dispositif de sondage comprend des moyens pour sonder et exporter des données relatives à la conduite d'un véhicule hors du véhicule, et dans lequel les moyens pour exporter les données relatives à la conduite d'un véhicule depuis le véhicule exportent également les données relatives à l'état du dit moyen d'inviolabilité.

Selon un mode de réalisation non revendiqué, les moyens pour sonder des données relatives à l'état du dit moyen d'inviolabilité comprend un fil conducteur sécable reliant le dispositif de sondage à un point d'ancrage du véhicule, de sorte que l'arrachement du dispositif de sondage rompe le fil conducteur sécable.

Selon une variante non revendiquée, le dispositif est intégré dans un boîtier, l'une des faces du boîtier étant fixée sur une surface du véhicule, le fil conducteur sécable étant fixé à cette surface - de préférence plane -, entre le boîtier et la surface, de sorte que l'arrachement du boîtier rompe le fil conducteur sécable.

Selon l'invention, le moyen d'inviolabilité comprend un lecteur de radio-étiquette intégré dans le dispositif de sondage et au moins une radio-étiquette fixée à un point d'ancrage du véhicule de sorte que l'arrachement de la radio-étiquette modifie irréversiblement le mode de fonctionnement de cette radio-étiquette, cette modification de fonctionnement étant détectable par le lecteur de radio-étiquette.

Selon ce mode de réalisation, la radio-étiquette comprend des moyens d'émission et de réception reliés à une antenne et à des moyens de traitement, lesquels permettent à la radio-étiquette de répondre à des requêtes du lecteur de radio-étiquette en s'identifiant.

De préférence, la radio-étiquette est une puce RFID.

Selon une spécificité, la radio-étiquette est agencée de manière à ce que l'arrachement de la radio-étiquette de son point d'ancrage endommage irréversiblement cette radio-étiquette.

Selon une particularité non revendiquée, la radio-étiquette est agencée de manière à ce que l'arrachement de ladite la radio-étiquette de son point d'ancrage endommage irréversiblement l'antenne de cette radio-étiquette.

Selon l'invention, ladite radio-étiquette est agencée de manière à ce que l'arrachement de la radio-étiquette depuis son point d'ancrage rompe irréversiblement la connexion entre l'antenne et le reste du circuit de cette radio-étiquette.

Selon l'invention, la radio-étiquette a la forme d'une pastille dont l'une des faces est adhésive, laquelle est apte à être fixée à une surface - de préférence plane - du véhicule.

Ladite surface est un pare-brise.

Selon une spécificité, la radio-étiquette est enveloppée d'une pellicule métallique opaque aux ondes radioélectriques, la portion de la pellicule métallique recouvrant la face adhésive de la radio-étiquette pouvant être retirée manuellement. Ainsi, la communication radio-électrique entre la radio-étiquette et le lecteur ne peut s'opérer que lorsque la face adhésive est découverte. En d'autres termes la mise en service - ou l'activation - de la radio-étiquette est déclenchée par l'enlèvement de cette portion de pellicule.

Selon une spécificité, la radio-étiquette comprend sur sa face adhésive une cellule photosensible, apte à activer irréversiblement la radio-étiquette lorsqu'elle est éclairée.

De préférence, la cellule photosensible, est recouverte d'un film opaque.

Selon une particularité, les moyens pour sonder les données relatives à la conduite du véhicule comprennent un GPS et/ou un accéléromètre, et/ou un capteur de mouvement de type microbille à contact.

Selon un mode de réalisation, les moyens pour exporter les données hors du véhicule comprennent un moyen de mémorisation amovible apte à enregistrer les données relatives à la conduite du véhicule et à l'état du dit moyen d'inviolabilité.

Selon une spécificité, le moyen de mémorisation amovible est une clé USB, une carte mémoire de type SDRAM, ou une carte à mémoire sécurisée de type SIM.

Selon un autre mode de réalisation, les moyens pour exporter les données hors du véhicule comprennent des moyens pour transmettre les données relatives à la conduite du véhicule et à l'état du dit moyen d'inviolabilité par un réseau sans fil de type réseau de téléphonie GSM.

### BREVE DESCRIPTION DES FIGURES

D'autres caractéristiques et avantages de l'invention ressortiront à la lecture de la description qui suit, en référence aux figures annexées, dans lesquels:
- la figure 1 est une vue d'ensemble d'un exemple du système selon l'invention;
- la figure 2 est une vue schématique d'un pare-brise comportant un dispositif de sondage selon un premier mode de réalisation de l'invention non revendiqué;
- la figure 3 est une vue de détail du dispositif de sondage 19 de la figure 2;
- la figure 4a est une vue schématique d'un pare-brise comportant une radio-étiquette et un boîtier, lesquels composent un dispositif de sondage selon un deuxième mode de réalisation de l'invention;
- la figure 4b est une vue schématique représentant un véhicule comportant des radio-étiquettes disposées à plusieurs points d'ancrages d'un véhicule et un boîtier, lesquels composent le dispositif de sondage selon le deuxième mode de réalisation;
- la figure 5 représente une vue de détail d'une radio-étiquette selon le deuxième mode de réalisation;

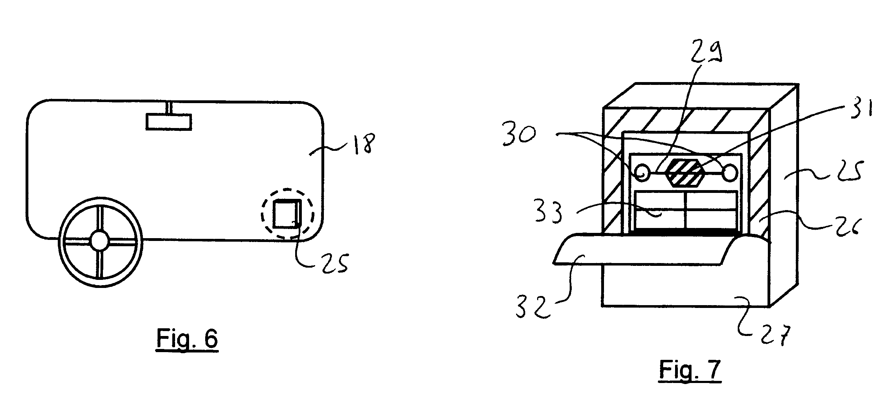

- la figure 6 représente une vue schématique d'un pare-brise comportant un dispositif de sondage selon un troisième mode de réalisation non revendiqué;
- la figure 7 est une vue de détail du dispositif de sondage selon le troisième mode de réalisation;
- la figure 8 représente un organigramme de fonctionnement du dispositif de sondage selon l'invention;
- la figure 9 représente un organigramme de fonctionnement de la base de données du système de sondage de données selon l'invention,

Pour plus de clarté, les éléments identiques ou similaires sont repérés par des signes de référence identiques sur l'ensemble des figures.

### DESCRIPTION DETAILLEE D'UN MODE DE REALISATION

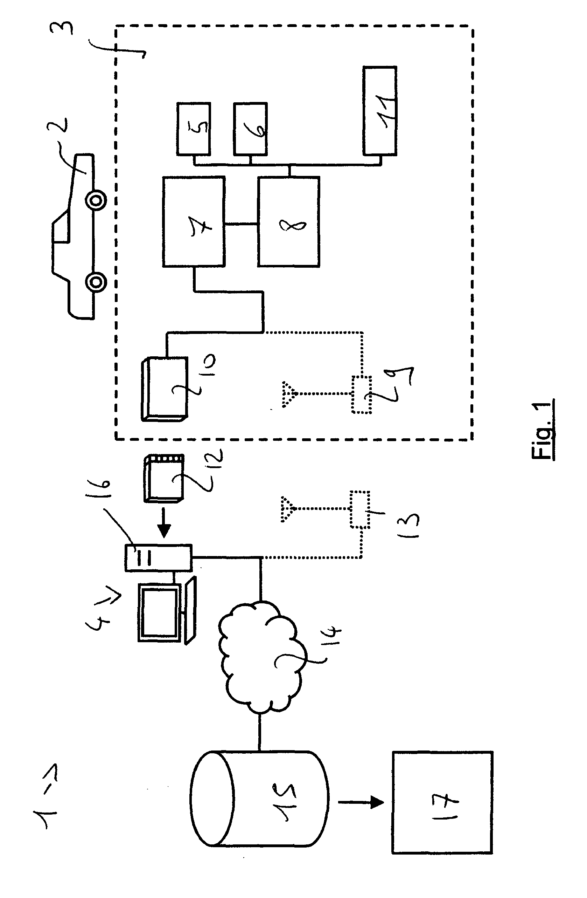

En référence à la figure 1, un système de sondage de données 1 relatives au comportement de conduite du conducteur d'un véhicule 2 selon l'invention, se compose d'un dispositif d'échange de données 3 embarqué dans un véhicule, de type automobile dans l'exemple illustré, et de dispositifs complémentaires 4 situés à l'extérieur du véhicule.

Le dispositif de sondage de données embarqué comprend des moyens de détection 5, 6 de la conduite du véhicule, des moyens de mémoire 7, et des moyens de traitement 8 des moyens de détection 5, 6 et de mémoire 7.

Les moyens de détection 5, 6 sont dans l'exemple illustré un GPS 5, et/ou un accéléromètre 6 et/ou encore un détecteur de vibration (non représenté).

Alternativement, d'autres types de détecteurs pouvant sonder le comportement de conduite d'un véhicule sont utilisables, par exemple de type consistant à enregistrer les clignotants, ou encore, consistant à mesurer la fréquence d'utilisation des freins ou des phares (non représenté).

Les moyens de traitement 8 sont des convertisseurs lesquels sont reliés aux moyens de détection 5, 6 pour transformer les signaux électriques des moyens de détection en données numériques enregistrables sur une mémoire 7. Dans l'exemple, les moyens de traitement 8 relèvent à intervalle régulier les coordonnées géographiques du véhicule sur le GPS 5 et les enregistrent sur la mémoire 7.

Le dispositif de sondage 3 est fixé sur le véhicule 2 et un moyen d'inviolabilité 11 consistant en un fil sécable comme explicité ci-après, atteste que le dispositif de sondage 3 n'a pas été déplacé, du moins hors du véhicule.

Les moyens de traitement sont également reliés au moyen d'inviolabilité 11. Le moyen d'inviolabilité 11 permet au moyen de traitement 8 de détecter l'état de celle-ci. En d'autres termes, le moyen de traitement 8 est capable de détecter si le moyen d'inviolabilité a été forcé ou non. Ainsi, l'état du moyen d'inviolabilité peut être traduit sous forme de données par les moyens de traitement.

Alternativement, le moyen d'inviolabilité 11 comprend un convertisseur pour transmettre directement des données relatives à son état au moyen de traitement.

Le moyen de traitement 8 détecte l'état du moyen d'inviolabilité 11 et enregistre les données relatives à son état sur la mémoire 7.

Le dispositif de sondage 3 comprend en outre des moyens 9, 10 permettant d'exporter des données depuis le véhicule 2 vers une base données 15 située à l'extérieur du véhicule.

Selon un premier mode, les moyens d'exportation de données comprennent des moyens d'émission de données par voie d'onde électromagnétique 9. Ces moyens d'émission peuvent utilisent les réseaux téléphoniques de type GSM, HEDGE, 3G, ou autre. Les données sont reçues par un récepteur 13 et transférées via un réseau 14, constitué par le réseau de téléphonie de l'opérateur ou Internet, vers une base de données 15 d'un prestataire de services ou de l'assureur du véhicule. Ce mode de réalisation, utilisant un réseau de type téléphonie pour exporter les données, présente l'avantage d'être plus pratique pour l'utilisateur car ce dernier n'a pas de manipulation à faire pour exporter les données.

Selon un deuxième mode, les moyens d'exportation comprennent des moyens de mémoire amovibles 12. En particulier, les moyens de mémoire amovibles 12 sont une clé USB, une carte mémoire "SD-Ram" ou un "memory stick" ou équivalent. Les moyens de mémoire amovibles 12 viennent se brancher sur un socle-récepteur 10 pour mémoire amovible 12. Lorsque l'utilisateur souhaite exporter les données depuis le véhicule 2, vers la base de données 15 de l'assureur, l'utilisateur retire les moyens de mémoire amovible 12 du socle-récepteur 10 et le branche à un ordinateur 15 connecté à réseau 14, par exemple Internet, pour transférer les données vers la base de données 15. Ce mode de réalisation présente l'avantage d'être moins coûteux à la réalisation et techniquement moins complexe.

Une fois que les données sont stockées sur la base de données 15, elles peuvent être enrichies de données cartographiques et l'exposition au risque (nombre de kilomètres par type de route, par tranche horaires...) et/ou le comportement de conduite des conducteurs de chaque véhicule peut être traité par des moyens de calcul 17 qui peuvent contribuer par exemple, à déterminer le prix de l'assurance propre à chaque véhicule en fonction du comportement de conduite de chaque véhicule. Selon cet exemple d'application, un véhicule ayant une faible exposition au risque et/ou des conducteurs au comportement de conduite prudent bénéficiera d'avantages tarifaires sur son assurance.

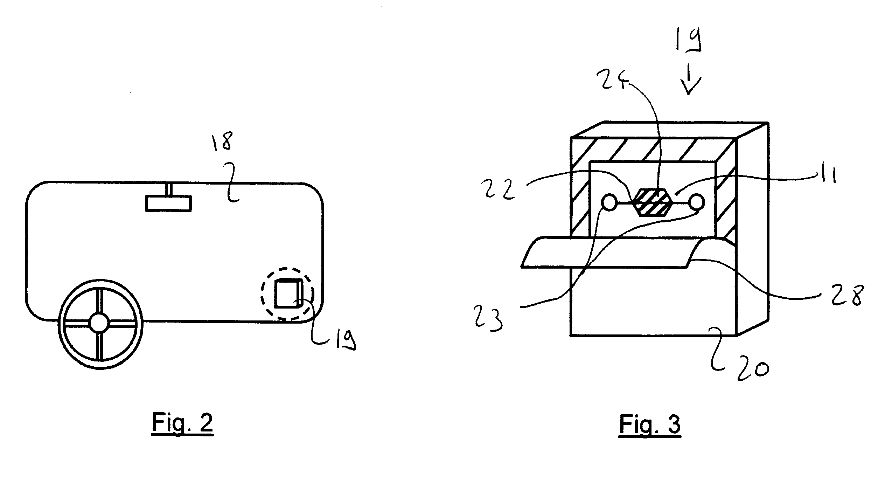

Les figures 2 et 3 présentent un premier mode de réalisation non revendiqué du moyen d'inviolabilité 11.

La figure 2 montre un dispositif de sondage 3, lequel est logé dans un boîtier 19 fixé au pare-brise. Le boîtier 19 comprend une face de fixation 20 pourvue de moyens de fixation de manière à ce que ladite face 20 soit apte à se fixer ledit pare-brise 18. Comme illustré sur la figure 3, les moyens de fixation sont composés d'une bande adhésive 21 disposée sur le pourtour de cette face de fixation 20. Dans ce mode de réalisation, le moyen d'inviolabilité 11 comprend un fil sécable 22 disposé sur ladite face de fixation 20. Le fil sécable 22 est tendu entre deux orifices 23 formés sur ladite face de fixation 20. À une distance intermédiaire entre les deux orifices 23, une pastille adhésive 24 fixe le fil sécable 22 au pare-brise 18 de manière à ce que la pastille adhésive 24 maintienne une portion du fil sécable 22 solidaire du pare-brise 18 de sorte que si le boîtier 19 était arraché, ceci provoquerait inévitablement la rupture du fil sécable 22. Le fil sécable 22 est conducteur et connecté au moyen de traitement 8 du dispositif de sondage 3 de manière à ce que la rupture du fil sécable 22 soit irréversiblement détectable par les moyens de traitement et que cela soit mémorisé dans les moyens de mémoire. En d'autres termes, le caractère conducteur du fil sécable 22 sert de témoin d'inviolabilité.

Avant la pose du boîtier sur le pare-brise, les parties adhésives 21, 24 de la face de fixation 20 sont recouvertes d'une feuille protectrice 28.

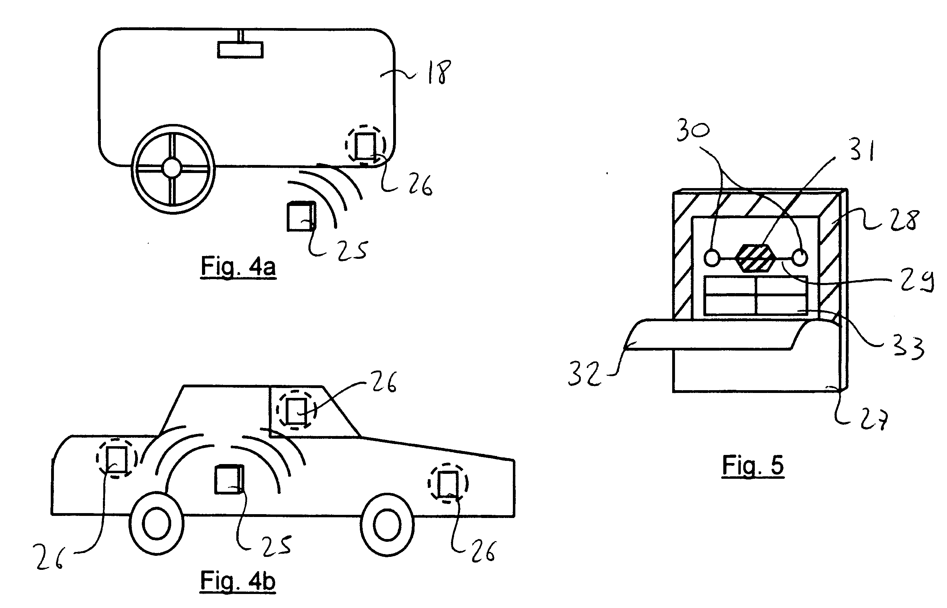

Les figures 4a, 4b et 5 présentent un deuxième mode de réalisation du moyen d'inviolabilité 11.

Comme illustré sur la figure 4a, le dispositif de sondage 3 se compose d'un boîtier comprenant les moyens de détection 5, 6, les moyens de traitement 8 et de mémoire 7 et d'exportation 10, 9. Le dispositif de sondage comprend des moyens d'inviolabilité comprenant un lecteur de radio-étiquettes, par exemple de type RFID, compris dans le boîtier 25 et de au moins une radio-étiquette 26 située à l'extérieur du boîtier 25.

La radio-étiquette 26, détaillée à la figure 5, se présente sous la forme d'une pastille plane ayant une face de fixation 27 destinée à se fixer sur le pare-brise 3 du véhicule.

La face de fixation 27 comprend une bande adhésive 28 disposée sur son pourtour. Le moyen d'inviolabilité 11 comprend un fil sécable 29 disposé sur ladite face de fixation 27. Le fil sécable 29 est tendu entre deux points 30 formés sur ladite face de fixation 27. À une distance intermédiaire entre les deux points 30, une pastille adhésive 31 fixe le fil sécable 29 au pare-brise 18 de manière à ce que la pastille adhésive 3 maintienne une portion du fil sécable 29 solidaire du pare-brise 18 de sorte que si la radio-étiquette 26 était arrachée, ceci provoquerait inévitablement la rupture du fil sécable 29.

Selon ce mode de réalisation, le fil sécable 29 relie l'antenne (non représentée) aux moyens d'émission et de réception de la radio-étiquette 26.

Ainsi, si une radio-étiquette 26 venait à être arrachée par un utilisateur indélicat, la radio-étiquette serait endommagée de manière irréversible car cette dernière, privée d'antenne, ne pourrait plus émettre ni recevoir d'informations. Cela serait détectable par moyen d'inviolabilité 11, en l'occurrence le lecteur de radio-étiquettes compris dans le boîtier 25. Les moyens de traitement 8 enregistreraient la perte du signal de la radio-étiquette 26 dans les moyens de mémoire 7. En d'autres termes, le caractère conducteur du fil sécable 29 sert de témoin d'inviolabilité.

Selon une alternative, la rupture du fil sécable 29 pourrait entraîner d'autres modifications du fonctionnement de la radio-étiquette détectable par le lecteur de radio-étiquettes, comme par exemple, un signal particulier ou un changement d'identité de la radio-étiquette, rendant cette dernière non identifiable par le lecteur de radio-étiquettes.

De préférence, les radio-étiquettes permettent leur auto-identification sur requête du lecteur de radio-étiquettes. Pour ce faire, les radio-étiquettes des types RFID sont particulièrement adaptées. En effet, les moyens de mémoire enregistrent non seulement l'état de la radio-étiquette mais également son identité afin d'éviter toute substitution frauduleuse de radio-étiquette par un client indélicat.

Avant la pose de la radio-étiquette sur le pare-brise, les parties adhésives 28, 31 de la face de fixation 27 sont recouvertes d'une feuille protectrice.

Selon un mode particulier de réalisation (non représenté), la radio-étiquette 26 est intégralement enveloppée d'une pellicule métallisée de manière à rendre ladite radio-étiquette imperméable aux ondes radio-électriques avant emploi - c'est-à-dire inactive. La portion de la pellicule métallisée recouvrant la face de fixation 27 peut être enlevée. Le fait d'enlever cette portion de feuille métallisée active la radio-étiquette 26, car cela lui permet de communiquer, via les ondes radio-électriques, avec le lecteur de radio-étiquette.

Selon une particularité de ce mode de réalisation, cette activation de la radio-étiquette 26 entraîne une émission d'un signal informant le lecteur de radio-étiquette de l'activation de la radio-étiquette 26 et de l'identité de la radio-étiquette 26. Ces informations sont ensuite inscrites sur les moyens de mémoire 7.

Selon une option, la face de fixation 27 comprend une cellule photosensible 33 qui permet d'activer la radio-étiquette 26 lors de sa pose sur le véhicule. Selon cette option, et avant utilisation, la feuille protectrice 32 est opaque de manière à maintenir la cellule photosensible 33 dans l'obscurité. Lors de la pose de la radio-étiquette 26 sur le véhicule, la feuille protectrice 32 opaque est ôtée et la lumière ambiante active cette radio-étiquette 26. Cette activation de la radio-étiquette 26 entraîne une émission d'un signal informant le lecteur de radio-étiquette de l'activation de la radio-étiquette 26 et de l'identité de la radio-étiquette 26. Ces informations sont ensuite inscrites sur les moyens de mémoire 7.

Comme illustré sur la figure 4b, un seul boîtier 25 comprenant un lecteur de radio-étiquettes peut interroger plusieurs radio-étiquettes 26 du type précité. Comme les radio-étiquettes 26 sont identifiables individuellement et que la présence de chaque radio-étiquette 26 est vérifiée par les moyens de traitement 8, les tentatives de fraudes seront plus difficiles avec plusieurs radio-étiquettes 26. En effet, supposons que le fraudeur veuille démonter les parties du véhicule comprenant une radio-étiquette 26 afin de fausser les données du comportement de conduite, le client indélicat sera obligé de démonter autant d'éléments que de radio-étiquettes 26, ce qui rendrait la fraude difficile, et pour le moins onéreuse.

Enfin, selon un troisième mode de réalisation non revendiqué, une radio-étiquette 26 comprenant une cellule photosensible 33 est directement montée sur le boîtier 25.

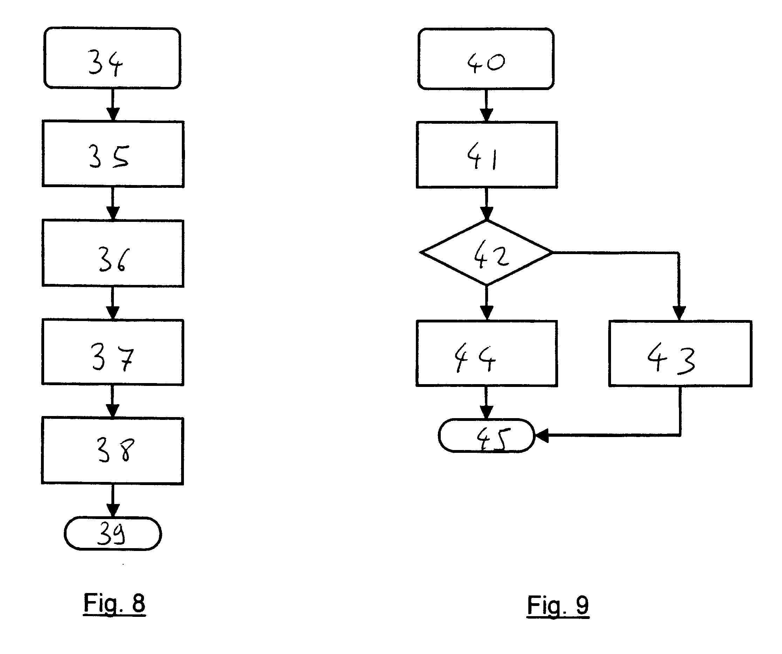

La figure 8 illustre le processus de fonctionnement du dispositif de sondage 3. Le fonctionnement comprend:
- une étape d'initialisation ou d'activation 34,
- une étape 35 dans laquelle les moyens de traitement 8 interrogent les moyens de détection 5, 6, par exemple GPS 5 et accéléromètre 6,
- une étape 36 dans laquelle les moyens de traitement 8 vérifient l'état des moyens d'inviolabilité 11,
- une étape 37 dans laquelle les moyens de traitement 8 enregistrent les données indiquées par les moyens de détection 5, 6 et les données relatives à l'état du moyen d'inviolabilité 11, sur les moyens de mémoire 7,
- une étape 38 dans laquelle les données enregistrées sont exportées depuis les moyens de mémoire 7 du véhicule vers une base de données extérieure 15, au moyen d'une mémoire amovible 12 de type USB et/ou un réseau 14 comme Internet et/ou encore via un réseau de téléphonie mobile de type GSM 13, 9.

En référence à la figure 9, le processus de fonctionnement de la base de données extérieure peut inclure les étapes suivantes:
- une étape d'initialisation 40,
- une étape 41 dans laquelle les données sont reçues, par exemple via un réseau de téléphonie GSM 13, 9 et/ou un réseau 14 comme Internet,
- une étape 42 dans laquelle les données relatives à l'intégrité de l'état des moyens d'inviolabilité 11 sont vérifiées, si l'état du témoin d'inviolabilité 11 indique qu'il a été forcé, alors les données issues des moyens de détection 5, 6 sont rejetées à l'étape 43 car considérées comme non fiables, sinon les données sont considérées comme fiables et aptes à être utilisées,
- une étape 44 dans laquelle les données fiables sont traitées par exemple pour calculer un avantage tarifaire relatif à une assurance en relation avec le comportement de conduite des conducteurs du véhicule. Au-delà d'un pourcentage significatif de données NON fiables, l'assureur peut ne délivrer aucun avantage tarifaire, ou aucun conseil de prévention.
- une étape 45 de finalisation.

Selon un processus de fonctionnement non représenté, l'étape 42 dans laquelle l'intégrité de l'état des moyens d'inviolabilité est vérifiée, est directement intégrée dans le processus de fonctionnement du dispositif de sondage 3. Ainsi, le dispositif de sondage n'exporte que les données considérées comme fiables. Cela permet de faire des économies relatives aux coûts engendrés par l'exportation des données.

D'autres modes de réalisation sont possibles, tout en restant dans le cadre de l'invention telle que définie dans les revendications.

## Revendications

1. Véhicule (2) équipé d'un dispositif de sondage (3) de données relatives à la conduite du véhicule (2), ledit dispositif de sondage (3) comprenant :
un moyen d'inviolabilité (11) définissant un état attestant que le dispositif de sondage est embarqué sur le véhicule (2), un boîtier (25) équipé de moyens de détection (5, 6) de ces données relatives à la conduite et à l'état dudit moyen d'inviolabilité (11), de moyens de traitement (8) et de mémoire (7) de ces données, de moyens d'exportation (9, 10) de ces données, **caractérisé en ce que** les moyens de traitement (8) sont agencés pour traiter les données relatives à l'état dudit moyen d'inviolabilité (11), les moyens d'exportation (10, 12, 9) sont agencés pour exporter les données relatives à l'état dudit moyen d'inviolabilité (11) et à la conduite du véhicule (2) hors du véhicule, le moyen d'inviolabilité (11) comprenant un lecteur de radio-étiquette de type RFID intégré dans le boîtier (25) du dispositif de sondage (3) et au
moins une radio-étiquette (26) de type RFID fixée à un point d'ancrage du véhicule (2) à l'extérieur du boîtier (25) à distance du boîtier dans la portée du lecteur de radio-étiquette de sorte que l'arrachement de ladite radio-étiquette modifie irréversiblement le mode de fonctionnement de cette radio-étiquette, cette modification de fonctionnement étant détectable par le lecteur de radio-étiquette, la radio-étiquette (26) se présentant sous la forme d'une pastille plane adhésive ayant une face de fixation (27) fixée sur le pare-brise de véhicule, la face de fixation (27) comprenant une bande adhésive (28) disposée sur son pourtour, le moyen d'inviolabilité (11) comprenant un fil sécable (29) conducteur disposé sur ladite face de fixation (27), le fil sécable (29) étant tendu entre deux points (30) formés sur la dite face de fixation (27), la pastille adhésive maintenant une portion du fil sécable (29) solidaire du pare-brise (18) de sorte que l'arrachage de la radio-étiquette (26) provoquerait la rupture du fil sécable (29), le fil sécable (29) reliant une antenne de la radio-étiquette (26) de type RFID à des moyens d'émission et de réception de la radio-étiquette (26) de type RFID qui est apte à communiquer avec les moyens de traitement (8) et permettant à la radio-étiquette (26) de type RFID de s'identifier et de répondre à des requêtes du lecteur de radio-étiquette en s'identifiant.

2. Véhicule (2) équipé d'un dispositif de sondage de données relatives à la conduite du véhicule (2) selon la revendication 1, dans lequel la radio-étiquette (26) comprend sur sa face adhésive (27) une cellule photosensible (33), apte à activer irréversiblement ladite radio-étiquette (26) lorsqu'elle est éclairée.

3. Véhicule (2) équipé d'un dispositif de sondage de données relatives à la conduite du véhicule (2) selon l'une des revendications de 1 à 2, dans lequel le moyen d'inviolabilité (11) comprend au moins deux radio-étiquettes (26).

4. Véhicule (2) équipé d'un dispositif de sondage de données relatives à la conduite du véhicule (2) selon l'une des revendications précédentes 1 à 3, dans lequel les moyens de détection (5, 6) comprennent un GPS (5) et/ou un accéléromètre et/ou un capteur à microbille à contact (6).

5. Véhicule (2) équipé d'un dispositif de sondage de données relatives à la conduite du véhicule (2) selon l'une des revendications précédentes 1 à 4, dans lequel les moyens pour exporter (10, 12) les données hors du véhicule comprennent un moyen de mémorisation amovible (12) apte à enregistrer les données relatives à la conduite du véhicule et à l'état du dit moyen d'inviolabilité (11).

6. Véhicule (2) équipé d'un dispositif de sondage de données relatives à la conduite du véhicule (2) selon la revendication 5, dans lequel le moyen de mémorisation amovible (12) est une clé USB, une carte mémoire de type SDRAM, ou une carte à mémoire sécurisée de type SIM.

7. Véhicule (2) équipé d'un dispositif de sondage de données relatives à la conduite du véhicule (2) selon l'une des revendications de 1 à 6, dans lequel les moyens pour exporter (9) les données hors du véhicule utilisent un réseau sans fil (9) de type réseau de téléphonie GSM.

8. Véhicule (2) équipé d'un dispositif de sondage selon l'une des revendications précédentes, dans lequel les données relatives à la conduite du véhicule (2) et à l'état du dit moyen d'inviolabilité (11) comprennent les moyens (9, 13, 10, 12, 4) pour exporter les données depuis le véhicule (2) vers une base de données (15) centralisée externe au véhicule (2).

## Patentansprüche

1. Fahrzeug (2), das mit einer Vorrichtung (3) zur Erhebung von Daten über das Führen des Fahrzeugs (2) ausgestattet ist, wobei die Erhebungsvorrichtung (3) umfasst:
ein Unverletzlichkeitsmittel (11), das einen Zustand definiert, der attestiert, dass sich die Erhebungsvorrichtung an Bord des Fahrzeugs (2) befindet, ein Gehäuse (25), das mit Mitteln (5, 6) zur Erfassung dieser Daten über das Führen und den Zustand des Unverletzlichkeitsmittels (11), mit Mitteln zum Bearbeiten (8) und Speichern (7) dieser Daten, mit Mitteln zur Weiterleitung (9, 10) dieser Daten versehen ist, **dadurch gekennzeichnet, dass** die Bearbeitungsmittel (8) derart vorgesehen sind, dass sie die Daten über den Zustand des Unverletzlichkeitsmittels (11) bearbeiten, wobei die Weiterleitungsmittel (10, 12, 9) derart vorgesehen sind, dass sie die Daten über den Zustand des Unverletzlichkeitsmittels (11) und das Führen des Fahrzeugs (2) aus dem Fahrzeug weiterleiten, wobei das Unverletzlichkeitsmittel (11) einen RFID-Leser, der in das Gehäuse (25) der Erhebungsvorrichtung (3) integriert ist, und mindestens einen RFID-Chip (26) umfasst, der an einem Verankerungspunkt des Fahrzeugs (2) außerhalb des Gehäuses (25) in einem Abstand zum Gehäuse in der Reichweite des RFID-Lesers befestigt ist, so dass das Abreißen des RFID-Chips die Funktionsweise dieses RFID-Chips auf irreversible Weise ändert, wobei diese Funktionsänderung vom RFID-Leser erkennbar ist, wobei der RFID-Chip (26) in Form eines flachen Haftplättchens vorhanden ist, das eine Befestigungsseite (27), die auf der Windschutzscheibe des Fahrzeugs befestigt ist, aufweist, wobei die Befestigungsfläche (27) einen Haftstreifen (28) umfasst, der auf ihrem Umfang angeordnet ist, wobei das Unverletzlichkeitsmittel (11) einen durchtrennbaren leitenden Draht (29) umfasst, der auf der Befestigungsfläche (27) angeordnet ist, wobei der durchtrennbare Draht (29) zwischen zwei Punkten (30) gespannt ist, die auf der Befestigungsfläche (27) ausgebildet sind, wobei das Haftplättchen einen Abschnitt des durchtrennbaren Drahtes (29) mit der Windschutzscheibe (18) fest verbunden hält, so dass das Abreißen des RFID-Chips (26) zum Bruch des durchtrennbaren Drahtes (29) führen würde, wobei der durchtrennbare Draht (29) eine Antenne des RFID-Chips (26) mit Sende- und Empfangsmitteln des RFID-Chips (26) verbindet, die geeignet ist, mit den Bearbeitungsmitteln (8) zu kommunizieren und es dem RFID-Chip (26) ermöglicht, sich zu identifizieren und auf Anfragen des RFID-Lesers zu antworten, wobei er sich identifiziert.

2. Fahrzeug (2), das mit einer Vorrichtung zur Erhebung von Daten über das Führen des Fahrzeugs (2) ausgestattet ist, nach Anspruch 1, bei dem der RFID-Chip (26) auf seiner Haftfläche (27) eine Fotozelle (33) umfasst, die geeignet ist, den RFID-Chip (26) auf irreversible Weise zu aktivieren, wenn sie beleuchtet wird.

3. Fahrzeug (2), das mit einer Vorrichtung zur Erhebung von Daten über das Führen des Fahrzeugs (2) ausgestattet ist, nach einem der Ansprüche 1 bis 2, bei dem das Unverletzlichkeitsmittel (11) mindestens zwei RFID-Chips (26) umfasst.

4. Fahrzeug (2), das mit einer Vorrichtung zur Erhebung von Daten über das Führen des Fahrzeugs (2) ausgestattet ist, nach einem der vorhergehenden Ansprüche 1 bis 3, bei dem die Erfassungsmittel (5, 6) ein GPS-System (5) und/oder einen Beschleunigungsmesser und/oder einen Mikrokugelkontaktsensor (6) umfassen.

5. Fahrzeug (2), das mit einer Vorrichtung zur Erhebung von Daten über das Führen des Fahrzeugs (2) ausgestattet ist, nach einem der vorhergehenden Ansprüche 1 bis 4, bei dem die Mittel zum Weiterleiten (10, 12) der Daten aus dem Fahrzeug ein abnehmbares Speichermittel (12) umfassen, das geeignet ist, die Daten über das Führen des Fahrzeugs und den Zustand des Unverletzlichkeitsmittels (11) aufzuzeichnen.

6. Fahrzeug (2), das mit einer Vorrichtung zur Erhebung von Daten über das Führen des Fahrzeugs (2) ausgestattet ist, nach Anspruch 5, bei dem das abnehmbare Speichermittel (12) ein USB-Stick, eine Speicherkarte des Typs SDRAM oder eine gesicherte Speicherkarte des Typs SIM ist.

7. Fahrzeug (2), das mit einer Vorrichtung zur Erhebung von Daten über das Führen des Fahrzeugs (2) ausgestattet ist, nach einem der Ansprüche 1 bis 6, bei dem die Mittel zum Weiterleiten (9) der Daten aus dem Fahrzeug ein drahtloses Netz (9) vom Typ GSM-Telefonnetz verwenden.

8. Fahrzeug (2), das mit einer Vorrichtung zur Erhebung von Daten ausgestattet ist, nach einem der vorhergehenden Ansprüche, bei dem die Daten über das Führen des Fahrzeugs (2) und den Zustand des Unverletzlichkeitsmittels (11) die Mittel (9, 13, 10, 12, 4) umfassen, um die Daten vom Fahrzeug (2) zu einer zentralisierten Datenbasis (15) außerhalb des Fahrzeugs (2) weiterzuleiten.

## Claims

1. Vehicle (2) equipped with a device (3) for probing data relating to the driving of the vehicle (2), said probing device (3) comprising:
a tamper resistance means (11) defining a state attesting that the probing device is installed on the vehicle (2), a housing (25) equipped with means (5, 6) for detecting these data relating to the driving and to the state of said tamper resistance means (11), means for processing (8) and storing (7) these data, means (9, 10) for exporting these data, **characterized in that** the processing means (8) are arranged to process the data relating to the state of said tamper resistance means (11), the exporting means (10, 12, 9) are arranged to export the data relating to the state of said tamper resistance means (11) and to the driving of the vehicle (2) outside the vehicle, the tamper resistance means (11) comprising a radio-tag reader of RFID type incorporated in the housing (25) of the probing device (3) and at least one radio-tag (26) of RFID type fixed to an anchoring point of the vehicle (2) outside the housing (25) at a distance from the housing within range of the radio-tag reader such that the tearing off of said radio-tag irreversibly modifies the mode of operation of this radio-tag, this operation modification being able to be detected by the radio-tag reader, the radio-tag (26) taking the form of an adhesive planar pad having a fixed face (27) fixed to the windshield of the vehicle, the fixing face (27) comprising an adhesive strip (28) arranged on its perimeter, the tamper resistance means (11) comprising a conductive divisible wire (29) positioned on said fixing face (27), the divisible wire (29) being stretched between two points (30) formed on said fixing face (27), the adhesive pad maintains a portion of the divisible wire (29) secured to the windshield (18) such that the tearing off of the radio-tag (26) would cause the divisible wire (29) to break, the divisible wire (29) linking an antenna of the radio-tag (26) of RFID type to transmission and reception means of the radio-tag (26) of RFID type which is suitable for communicating with the processing means (8) and makes it possible for the radio-tag (26) of RFID type to be identified and to respond to requests from the radio-tag reader being identified.

2. Vehicle (2) equipped with a device for probing data relating to the driving of the vehicle (2) according to Claim 1, in which the radio-tag (26) comprises, on its adhesive face (27), a photosensitive cell (33), suitable for irreversibly activating said radio-tag (26) when it is illuminated.

3. Vehicle (2) equipped with a device for probing data relating to the driving of the vehicle (2) according to one of Claims 1 and 2, in which the tamper resistance means (11) comprises at least two radio-tags (26).

4. Vehicle (2) equipped with a device for probing data relating to the driving of the vehicle (2) according to one of the preceding Claims 1 to 3, in which the detection means (5, 6) comprise a GPS (5) and/or an accelerometer and/or a contact microball sensor (6).

5. Vehicle (2) equipped with a device for probing data relating to the driving of the vehicle (2) according to one of the preceding Claims 1 to 4, in which the means for exporting (10, 12) the data from the vehicle comprise a removable storage means (12) suitable for recording the data relating to the driving of the vehicle and to the state of said tamper resistance means (11).

6. Vehicle (2) equipped with a device for probing data relating to the driving of the vehicle (2) according to Claim 5, in which the removable storage means (12) is a USB key, a memory card of SDRAM type, or a secure memory card of SIM type.

7. Vehicle (2) equipped with a device for probing data relating to the driving of the vehicle (2) according to one of Claims 1 to 6, in which the means for exporting (9) the data from the vehicle use a wireless network (9) of GSM telephony network type.

8. Vehicle (2) equipped with a probing device according to one of the preceding claims, in which the data relating to the driving of the vehicle (2) and to the state of said tamper resistance means (11) comprise the means (9, 13, 10, 12, 4) for exporting the data from the vehicle (2) to a centralized data base (15) external to the vehicle (2).
